# EUROPÄISCHE PATENTANMELDUNG

(11) **EP 3 581 405 A1**
(43) Veröffentlichungstag der Anmeldung: **18.12.2019**
(21) Anmeldenummer: 18465532.2
(22) Anmeldetag: 13.06.2018
(51) Int. Cl.: B60C 23/04, B60C 19/00

(54) **SYSTEM ZUR ERMITTLUNG EINER DREHRICHTUNG EINES REIFENS EINES KRAFTFAHRZEUGS SOWIE EIN KRAFTFAHRZEUG MIT EINEM DERARTIGEN SYSTEM**

(71) Anmelder: Continental Automotive Romania SRL, 300704 Timisoara (RO)
(72) Erfinder: Oancea, Iulian, 707305 Miroslava, Iasi (RO); Oancea, Iulia, 707305 Miroslava, Iasi (RO)

(57) **Zusammenfassung**

Die Erfindung betrifft ein System (2) zur Ermittlung der Drehrichtung (4) eines Reifens (6) eines Kraftfahrzeugs (8), wobei das System (2) einen Sensor (10) und eine Verarbeitungseinheit (12) aufweist, wobei der Sensor (10) zur Anordnung derart ausgebildet ist, so dass mindestens einen Teil des Reifens (6) des Kraftfahrzeugs (8) von einem Sensorbereich (14) des Sensors (10) erfassbar ist; wobei der Sensor (10) ausgebildet ist, reifendrehrichtungsbezogene Rotationsdaten von und/oder mit mindestens einem Indikator (16) des Reifens (6) kontaktlos zu erfassen; und wobei die Verarbeitungseinheit (12) konfiguriert ist, eine Drehrichtung (4) des Reifens (6) basierend auf den erfassten Rotationsdaten zu ermitteln. Außerdem betrifft die Erfindung ein Kraftfahrzeug (8) mit einem System (2).

## Beschreibung

Die Erfindung betrifft ein System zur Ermittlung der Drehrichtung eines Reifens eines Kraftfahrzeugs sowie ein Kraftfahrzeug mit einem derartigen System.

Ein Kraftfahrzeug weist für gewöhnlich eine Vielzahl von Reifen auf. Ein Beispiel für ein Kraftfahrzeug ist beispielsweise ein Auto, das vier Reifen aufweist. Mit den Reifen kann das Kraftfahrzeug über einen Untergrund, beispielsweise eine Straße, rollen. Zwischen jedem Reifen und dem Untergrund besteht ein Reibungswiderstand, der zweckmäßig dazu dient, um das Kraftfahrzeug über die Reifen zu beschleunigen oder von einer Geschwindigkeit abzubremsen. Diese zweckmäßige Reibung zwischen jedem Reifen und dem Untergrund wird auch als Bodenhaftung, Griffigkeit oder Grip bezeichnet. Im Weiteren soll der Einfachheit halber der Begriff Bodenhaftung verwendet werden. Die Bodenhaftung eines Reifens ist oftmals abhängig von einer Drehrichtung des Reifens. Denn einem Reifen ist eine Vorzugsdrehrichtung zugeordnet, die auch als vorbestimmte Referenzdrehrichtung bezeichnet wird. Die Drehrichtung eines Reifens bezieht sich auf die tatsächliche Drehrichtung des Reifens. Sie kann der Vorzugsdrehrichtung des Reifens entsprechen oder entgegengesetzt zu der Vorzugsdrehrichtung sein. Die Drehrichtung bezieht sich dabei auf eine rotatorische Bewegung eines Reifens, die ausgeführt wird, wenn ein Kraftfahrzeug vorwärts bewegt wird. Wird ein Reifen, derart an dem Kraftfahrzeug montiert, dass dieser bei einer translatorischen Vorwärtsbewegung des Kraftfahrzeugs in einer Drehrichtung bewegt wird, die entgegengesetzt der Vorzugsdrehrichtung ist, so ist die Bodenhaftung zwischen den Reifen und dem Untergrund deutlich verringert gegenüber der Bodenhaftung, die der gleiche Reifen aufbringen könnte, wenn dieser in einer Drehrichtung bewegt werden würde, die der Vorzugsdrehrichtung entspricht.

Der Erfindung liegt die Aufgabe zugrunde, ein System und/oder ein Fahrzeug bereitzustellen, dass eine Ermittlung einer Drehrichtung eines Reifens des Kraftfahrzeugs besonders einfach gewährleistet.

Gemäß einem ersten Aspekt der Erfindung wird die zuvor genannte Aufgabe gelöst durch ein System zur Ermittlung der Drehrichtung eines Reifens eines Kraftfahrzeugs, wobei das System einen Sensor und eine Verarbeitungseinheit aufweist. Der Sensor ist zur Anordnung derart ausgebildet, sodass mindestens ein Teil des Reifens des Kraftfahrzeugs von einem Sensorbereich des Sensors erfassbar ist. Der Sensor ist außerdem ausgebildet, reifendrehrichtungsbezogene Rotationsdaten von und/oder mit mindestens einem Indikator des Reifens kontaktlos zu erfassen. Die Verarbeitungseinheit ist konfiguriert, eine Drehrichtung des Reifens basierend auf den erfassten Rotationsdaten zu ermitteln.

Das zuvor erläuterte System kann beispielsweise ein Teil eines Kraftfahrzeugs bilden, sodass der Sensor reifendrehrichtungsbezogene Rotationsdaten von und/oder mit mindestens einem Indikator eines Reifens des Kraftfahrzeugs kontaktlos erfassen kann. Ist dies erfolgt, können die entsprechenden reifendrehrichtungsbezogenen Rotationsdaten von der Verarbeitungseinheit des Systems verwendet werden, um die Drehrichtung des Reifens zu ermitteln, von dem zuvor die reifendrehrichtungsbezogenen Rotationsdaten erfasst wurden. Die für den Reifen ermittelte Drehrichtung bietet darüber Ausschluss, ob diese Drehrichtung mit einer gewünschten, für den Reifen vorbestimmten Referenzdrehrichtung übereinstimmt. Ist dies der Fall, kann gewährleitet werden, dass der Reifen eine besonders gute Bodenhaftung sicherstellt. Im Weiteren wird die für einen Reifen bevorzugte Drehrichtung, bei der eine besonders hohe Bodenhaftung gewährleitet wird, als Vorzugsdrehrichtung des jeweiligen Reifens bezeichnet. Entspricht die ermittelte Drehrichtung des Reifens des Kraftfahrzeugs nicht der Vorzugsdrehrichtung für diesen Reifen, so sollte dieser Reifen besser umgekehrt montiert werden, sodass bei einer erneuten Ermittlung der Drehrichtung dieses Reifens eine Übereinstimmung mit der Vorzugsdrehrichtung erreicht wird.

Reifendrehrichtungsbezogene Rotationsdaten sind vorzugsweise Daten, die eine Drehrichtung des Reifens repräsentieren, und/oder Daten, mittels der auf die Drehrichtung des Reifens direkt oder indirekt geschlossen werden kann. Die Drehrichtung eines Reifens kann bevorzugt entweder eine Vorwärtsdrehrichtung oder eine Rückwärtsdrehrichtung sein. Mit anderen Worten kann das vorgesehen sein, dass die Drehrichtung des Reifens ausschließlich angibt, ob sich der Reifen vorwärts oder rückwärts bewegt. Die Vorzugsdrehrichtung entspricht vorzugsweise der Vorwärtsdrehrichtung des Reifens.

Jeder Indikator eines Reifens kann sich auf ein optisches Merkmal, ein stoffspezifisches Merkmal, ein Element eines Reifens, ein Bauteil eines Reifens, eine Kontur eines Reifens, und/oder ein anderes charakteristisches Bestandteil und/oder Merkmal eines Reifens beziehen. Vorzugsweise weist jeder Reifen mehrere Indikatoren auf, die sich vorzugsweise voneinander unterscheiden.

Der Sensor kann dazu ausgebildet sein, die reifendrehrichtungsbezogenen Rotationsdaten von einem Indikator des Reifens kontaktlos zu erfassen. Der Indikator kann die reifendrehrichtungsbezogenen Daten zur Verfügung stellen, sodass diese von dem Sensor kontaktlos erfasst bzw. an diesen kontaktlos übertragen werden können. Sind mehrere Indikatoren für den Reifen vorgesehen, so kann jeder Indikator einen Teil der reifendrehrichtungsbezogenen Rotationsdaten zur Verfügung stellen, wobei der Sensor den jeweiligen Teil von jedem Indikator kontaktlos erfassen kann.

Es ist jedoch auch möglich, dass die reifendrehrichtungsbezogenen Rotationsdaten nicht von dem mindestens einem Indikator des Reifens unmittelbar zu Verfügung gestellt werden. So kann es beispielsweise vorgesehen sein, dass die Form des Indikators und/oder die Anordnung von mehreren Indikatoren eines Reifens, wenn der Indikator bzw. die Indikatoren bei der Rotation des Reifens durch den Sensorbereich des Sensors fahren, von dem Sensor kontaktlos erfasst werden, und dem Sensor aufgrund ihrer Form und/oder Ihrer Anordnung Informationen zur Verfügung stellen, die von dem Sensor als die reifendrehrichtungsbezogenen Reifendaten erfasst werden. Weist ein Indikator beispielsweise eine keilförmige Form auf und wird dieser keilförmige Indikator durch den Sensorbereich des Sensors durchbewegt, kann die Richtung, in der die Spitze des keilförmigen Indikators weist als die reifendrehrichtungsbezogenen Rotationsdaten erfasst werden. Basierend auf diesen reifendrehrichtungsbezogenen Rotationsdaten ist es dann mittels der Verarbeitungseinheit des Systems möglich, die Drehrichtung des Reifens zu ermitteln.

Besonders bevorzugt ist das Kraftfahrzeug als ein Auto ausgebildet. Bei Autos ist es oftmals wünschenswert, dass jeder Reifen die gewünschte Vorzugsdrehrichtung bei einer Vorwärtsbewegung des Autos ausführt, um eine möglichst hohe Bodenhaftung über die Reifen für das Fahrzeug zu gewährleisten.

Die Verarbeitungseinheit ist vorzugsweise als eine Datenverarbeitungseinheit ausgebildet.

Eine vorteilhafte Ausgestaltung des Systems zeichnet sich dadurch aus, dass der Sensor und die Verarbeitungseinheit integral, insbesondere als eine integrale Einheit, oder separat ausgebildet und/oder angeordnet sind.

Eine weitere vorteilhafte Ausgestaltung des Systems zeichnet sich dadurch aus, dass das System einen Reifen für ein Kraftfahrzeug aufweist, wobei der Reifen den mindestens einen Indikator umfasst. Mit anderen Worten kann es vorgesehen sein, dass der Reifen, für den die Drehrichtung zu ermitteln ist, einen Teil des Systems bildet. Der Reifen ist vorzugsweise ein Reifen eines Autos. Außerdem kann es vorgesehen sein, dass bei einem Auto mehrere Systeme zur Bestimmung der Drehrichtung der Reifen vorgesehen sind. So kann es beispielsweise bei einem Auto mit vier Reifen vorgesehen sein, dass das Auto vier Systeme umfasst.

Eine weitere vorteilhafte Ausgestaltung des Systems zeichnet sich dadurch aus, dass der Reifen mindestens zwei Indikatoren aufweist. Dies kann entsprechend für jedes System gelten. Weiterhin hat es sich als vorteilhaft herausgestellt, wenn der Reifen eines Systems eine Mehrzahl von Indikatoren, beispielsweise zwei, drei, vier oder sogar weitere Indikatoren aufweist. Die mehreren Indikatoren können in einer vorbestimmten Anordnung an dem Reifen angeordnet sein. So können die Indikatoren beispielsweise in einer vorbestimmten Anordnung in Umfangsrichtung des Reifens, beispielsweise an der Reifenseitenwand, an einer mantelseitigen Innenfläche des Reifens, und/oder an einem anderen geeigneten Abschnitt des Reifens angeordnet sein. Insbesondere wenn die Anordnung der Indikatoren eines Reifens vorbestimmt und/oder vorbekannt ist, können die Indikatoren von dem Sensor des Systems kontaktlos erfasst werden, wenn diese insbesondere nacheinander durch den Sensorbereich bewegt werden. Grundsätzlich kann es auch vorgesehen sein, dass mehrere Sensoren gleichzeitig durch den Sensorbereich des Sensors bewegt werden. In diesem Fall kann insbesondere auch von dem Sensor erfasst werden, welcher der Sensoren als erstes in den Sensorbereich des Sensors hineinbewegt wird. Außerdem kann von dem Sensor der zeitliche Abstand zwischen den mehreren Indikatoren erfasst werden.

Die reifendrehrichtungsbezogenen Rotationsdaten eines Reifens mit mindestens zwei Indikatoren kann dabei vorzugsweise umfassen: einen Zeitpunkt für jeden Indikator, wann der jeweilige Indikator in den Sensorbereich hineinbewegt wurde, wann der jeweilige Indikator aus dem Sensorbereich herausbewegt wurde, der räumliche und/oder zeitliche Abstand zwischen jeweils zwei benachbarten Indikatoren in Umfangsrichtung des Reifens und/oder einen Wert, der die geometrische Größe und/oder Dichte des jeweiligen Indikators repräsentiert. In einem Beispiel kann es vorgesehen sein, dass sich die Größe von zwei Indikatoren eines Reifens voneinander unterscheiden. In Abhängigkeit davon, in welcher Reihenfolge die Indikatoren von dem Sensor kontaktlos erfasst werden, kann die Drehrichtung des Reifens mittels der Verarbeitungseinheit des Systems ermittelt werden. Somit können die reifendrehrichtungsbezogenen Rotationsdaten beispielsweise die von dem Sensor erfasste Information repräsentieren, dass zunächst der kleinere der beiden Indikatoren und daraufhin der größere der beiden Indikatoren durch den Sensorbereich des Sensors bewegt wurde. Wie bereits angedeutet, kann basierend auf diesen Rotationsdaten mittels der Verarbeitungseinheit auf die Drehrichtung des Reifens geschlossen werden. Dazu ist die Verarbeitungseinheit entsprechend konfiguriert.

Eine vorteilhafte Ausgestaltung des Systems zeichnet sich dadurch aus, dass die Verarbeitungseinheit konfiguriert ist, ein Warnsignal zu erzeugen, das eine Drehrichtungswarnung repräsentiert, wenn die ermittelte Drehrichtung des Reifens von einer vorbestimmten Referenzdrehrichtung für den Reifen abweicht. Die vorbestimmte Referenzdrehrichtung kann die Vorzugsdrehrichtung des Reifens sein. Für den Reifen kann die vorbestimmte Referenzdrehrichtung von der Verarbeitungseinheit gespeichert sein. Alternativ oder ergänzend kann die Verarbeitungseinheit eine Schnittstelle aufweisen, um die vorbestimmte Referenzdrehrichtung für den Reifen von einer anderen Einheit zu erhalten und/oder abzurufen. Die Verarbeitungseinheit kann dazu ausgebildet sein, die ermittelte Drehrichtung des Reifens mit der vorbestimmten Drehrichtung für den Reifen zu vergleichen. Wenn die ermittelte Drehrichtung des Reifens von der vorbestimmten Drehrichtung des Reifens abweicht, erzeugt die Verarbeitungseinheit das Warnsignal. Das Warnsignal repräsentiert die Drehrichtungswarnung. Die Drehrichtungswarnung gibt vorzugsweise darüber Auskunft, dass die Drehrichtung des Reifens nicht der vorbestimmten Referenzdrehrichtung für den Reifen entspricht, und somit mit einer reduzierten Bodenhaftung zu rechnen ist. Mit anderen Worten kann die Drehrichtungswarnung die Information zumindest indirekt wiedergeben, dass die ermittelte bzw. tatsächliche Drehrichtung des Reifens von einer vorbestimmten Referenzdrehrichtung für den Reifen abweicht.

Eine vorteilhafte Ausgestaltung des Systems zeichnet sich dadurch aus, dass die Verarbeitungseinheit konfiguriert ist, das Warnsignal an eine Steuereinheit eines Kraftfahrzeugs zu senden. Dazu kann die Verarbeitungseinheit eine Signalübertragungsschnittstelle aufweisen. Über diese Signalübertragungsschnittstelle kann die Verarbeitungseinheit eine Signalverbindung zu der Steuereinheit herstellen. Die Signalübertragungsschnittstelle der Verarbeitungseinheit kann eine Funkschnittstelle oder eine Kabelschnittstelle sein. Indem das Warnsignal an die Steuereinheit des Kraftfahrzeugs gesendet werden kann, kann die Steuereinheit die von dem Warnsignal repräsentierten Informationen verarbeiten und dem Fahrer des Fahrzeugs optisch und/oder akustisch zur Verfügung gestellt werden. Somit kann der Fahrer darüber Auskunft erhalten, dass ein Reifen des Fahrzeugs nicht so montiert ist, dass die gewünschte Bodenhaftung gewährleistet ist. Außerdem kann der Fahrer basierend auf dem von dem Steuersignal empfangenen Warnsignal aufgefordert werden, die Einbaulage des Reifens zu überprüfen bzw. überprüfen zu lassen. Dazu kann dem Fahrer mittels eines Navigationsgeräts automatisch ein Weg zu einer Werkstatt vorgeschlagen werden.

Eine vorteilhafte Ausgestaltung des Systems zeichnet sich dadurch aus, dass der Sensor konfiguriert ist, reifendrehrichtungsbezogene Rotationsdaten berührungslos von oder mittels jedem einer Vielzahl von Indikatoren des Reifens zu jeweils einer anderen, entsprechenden Erfassungszeit zu erfassen. Die Indikatoren sind dabei versetzt zueinander in einer Umfangsrichtung des Reifens angeordnet. Außerdem ist die Verarbeitungseinheit bevorzugt derart konfiguriert, die Drehrichtung des Reifens basierend auf den Rotationsdaten der Indikatoren und/oder den Erfassungszeiten zu bestimmen.

Werden für einen Reifen beispielsweise zwei Indikatoren verwendet, so können die beiden Indikatoren in Umfangsrichtung des Reifens voneinander beabstandet hintereinander angeordnet sein. So ist es beispielsweise möglich, dass der zweite Indikator mit einem Abstand von 60 Grad Winkelmaß zu dem ersten Indikator angeordnet ist. Wird der Reifen nun gedreht, so kann es vorgesehen sein, wenn die Drehrichtung des Reifens der Vorzugsrichtung des Reifens entspricht, dass zunächst der erste Indikator in den Sensorbereich des Sensors und daraufhin der zweite Indikator in den Sensorbereich des Sensors bewegt wird. Mit anderen Worten wird zunächst der erste Indikator und daraufhin der zweite Indikator von dem Sensor erfasst. Die Erfassung des ersten Indikators kann zu einem Zeitpunkt T1 und die Erfassung des zweiten Indikators kann zu einem Zeitpunkt T2 stattfinden. Mit der Drehbewegung des Reifens kann aufgrund der erfassten Reihenfolge der Indikatoren, nämlich zunächst der erste Indikator und daraufhin der zweite Indikator, festgestellt werden, dass die Drehrichtung des Reifens tatsächlich der Vorzugsdrehrichtung des Reifens entspricht. Die Reihenfolge der erfassten Indikatoren und/oder die jeweiligen Zeitpunkte der Erfassung der Indikatoren mittels des Sensors können dabei die reifendrehrichtungsbezogenen Rotationsdaten sein, die mittels des Sensors kontaktlos erfasst werden. Diese reifendrehrichtungsbezogenen Rotationsdaten, also beispielsweise die Reihenfolge der erfassten Indikatoren und/oder die dazugehörigen Zeitpunkte, dienen der Verarbeitungseinheit als Basis, um die tatsächliche Drehrichtung des Reifens zu ermitteln. Mit anderen Worten wird die tatsächliche Drehrichtung des Reifens basierend auf den reifendrehrichtungsbezogenen Rotationsdaten ermittelt. Entspricht die ermittelte Drehrichtung des Reifens der vorbestimmten Referenzdrehrichtung des Reifens, also der Vorzugsdrehrichtung des Reifens, so ist es bevorzugt vorgesehen, dass kein Warnsignal von der Verarbeitungseinheit erzeugt wird.

Wurde der Reifen hingegen derart montiert, dass von dem Sensor bei einer Vorwärtsbewegung des Fahrzeugs mit diesem Reifen zunächst der zweite Indikator und daraufhin der erste Indikator erfasst wird, so kann diese entsprechende Reihenfolge und/oder die zugehörigen Erfassungszeiten die reifendrehrichtungsbezogenen Rotationsdaten bilden, die von dem Sensor kontaktlos erfassbar sind. Die Verarbeitungseinheit ermittelt basierend auf diesen reifendrehrichtungsbezogenen Rotationsdaten sodann die tatsächliche Drehrichtung des Reifens, die entgegengesetzt der Vorzugsdrehrichtung des Reifens ist. Mit anderen Worten wird der Reifen bei diesem Fahrzeug nicht derart verwendet, um die bevorzugt hohe, insbesondere optimale, Bodenhaftung zu erreichen. Dies ist in der Praxis nicht erwünscht. Da die ermittelte Drehrichtung des Reifens von der vorbestimmten Drehrichtung des Reifens abweicht, kann von der Verarbeitungseinheit ein Warnsignal erzeugt werden, das diese Abweichung bzw. Differenz zwischen der ermittelten Drehrichtung und der Vorzugsdrehrichtung für den Reifen repräsentiert. Weiterhin kann es vorgesehen sein, dass das Warnsignal an die Steuereinheit des Kraftfahrzeugs gesendet wird. Hier kann die Steuereinheit das Warnsignal weiter verarbeiten, vorzugsweise derart, dass der Fahrer im Cockpit eine akustische und/oder optische Warnmeldung erhält, die darüber Aufschluss ergibt, dass ein Reifen des Kraftfahrzeugs in einer Weise montiert ist, so dass der Reifen bei einer Vorwärtsbewegung des Fahrzeugs nicht die Vorzugsdrehrichtung ausführt und/oder nicht die optimale Bodenhaftung gewährleistet wird.

Eine vorteilhafte Ausgestaltung des Systems zeichnet sich dadurch aus, dass die Erfassung der reifendrehrichtungsbezogenen Rotationsdaten bei einer vorbestimmten Drehgeschwindigkeit des Reifens und/oder einer vorbestimmten translatorischen Bewegung des Reifens, hervorgerufen durch eine Drehung des Reifens, erfolgt. So kann das System beispielsweise dazu ausgebildet sein, dass die reifendrehrichtungsbezogenen Rotationsdaten erfasst werden, wenn der Reifen aufgrund seiner Drehung sich mit einer translatorischen Geschwindigkeit in eine Richtung bewegt, die der vorbestimmten translatorischen Referenzgeschwindigkeit entspricht. So kann es beispielsweise vorgesehen sein, dass die reifendrehrichtungsbezogenen Rotationsdaten bei einer Referenzgeschwindigkeit von 10 km/h, 20 km/h, 30 km/h oder 50 km/h erfasst werden. Andere Referenzgeschwindigkeiten sind grundsätzlich ebenfalls möglich. Vorzugsweise ist die Referenzgeschwindigkeit größer als 5 km/h. Entsprechende Werte können für die Rotationsgeschwindigkeit des Reifens gelten, die sich aus den zuvor genannten Beispielen bzw. dem Grenzwert für die Referenzgeschwindigkeit in translatorischer Richtung bestimmen lässt. Rein beispielhaft wird hier erwähnt, dass die Erfassung der reifendrehrichtungsbezogenen Rotationsdaten erfolgen können, wenn der Reifen eine Drehgeschwindigkeit von beispielsweise zehn Umdrehungen pro Minute ausführt. Das System kann dazu ausgebildet und/oder konfiguriert sein, die Erfassung der reifendrehrichtungsbezogenen Rotationsdaten bei einer vorbestimmten, translatorischen Bewegung des Reifens und/oder bei einer vorbestimmten, rotatorischen Bewegung des Reifens auszuführen. Diese Informationen können dem System, insbesondere dem Sensor und/oder der Verarbeitungseinheit, über eine Schnittstelle zur Verfügung gestellt werden. So kann es beispielsweise vorgesehen sein, dass eine Steuereinheit die Geschwindigkeit des Fahrzeugs über die vorgenannte Schnittstelle an das System überträgt.

Eine weitere vorteilhafte Ausgestaltung des Systems zeichnet sich dadurch aus, dass der Sensor ausgebildet ist, den Abstand zwischen benachbarten Indikatoren eines Reifens zu erfassen. Der Abstand kann sich auf ein Längenmaß, Bogenmaß und/oder ein Winkelmaß beziehen. Wird von dem Sensor ein Reifen mit beispielsweise zwei Indikatoren erfasst, so können sich die reifendrehrichtungsbezogenen Rotationsdaten auch auf den zuvor genannten Abstand zwischen einem ersten Indikator der beiden, erfassten Indikatoren und dem anderen, zweiten Indikator beziehen. Beträgt der Abstand zwischen den beiden Indikatoren beispielsweise ein Winkelmaß von 60 Grad, so kann dies darauf schließen lassen, dass der Reifen in der Vorzugsdrehrichtung bewegt wurde. Beträgt der erfasste Abstand zwischen den beiden Indikatoren hingegen beispielsweise die korrespondierenden 300 Grad Winkelmaß, so lässt dies darauf schließen, dass der Reifen entgegengesetzt der Vorzugsdrehrichtung bewegt wurde. Der erfassbare Abstand zwischen den Indikatoren ist deshalb geeignet, reifendrehrichtungsbezogenen Rotationsdaten zu bilden. Außerdem ist die Verarbeitungseinheit bevorzugt derart konfiguriert, die Drehrichtung des Reifens basierend auf den reifendrehrichtungsbezogenen Rotationsdaten, insbesondere basierend auf dem Abstand zwischen mindestens zwei Indikatoren, zu ermitteln. Korrespondierendes kann für die erfassten Zeiten von mehreren Indikatoren eines Reifens gelten. Dies gilt insbesondere dann, wenn die Erfassung der reifendrehrichtungsbezogenen Rotationsdaten bei einer vorbestimmten Geschwindigkeit des Reifens, insbesondere Drehgeschwindigkeit und/oder translatorische Geschwindigkeit, erfolgt.

Eine vorteilhafte Ausgestaltung des Systems zeichnet sich dadurch aus, dass jeder Indikator als ein aktiver Indikator ausgebildet ist. Jeder Indikator kann beispielsweise als ein aktives, elektrisches Element, eine aktive, elektrische Schaltung, eine aktive Vorrichtung und/oder eine andere aktive Einheit ausgebildet sein. Ein aktiver Indikator zeichnet sich vorzugsweise dadurch aus, dass dieser eine Wechselwirkung mit dem Sensor ausführt, wenn der jeweilige Indikator von dem Sensor erfasst wird. Von einem aktiven Indikator kann zumindest ein Teil der reifendrehrichtungsbezogenen Rotationsdaten für den jeweiligen Reifen gespeichert sein. Außerdem kann der aktive Indikator dazu ausgebildet sein, die von diesem gespeicherte reifendrehrichtungsbezogene Daten kontaktlos an den Sensor zu übertragen, wenn der jeweilige Indikator von dem Sensor erfasst wird. Der aktive Indikator kann eine Drehrichtungsmesseinheit aufweisen, die zur Messung der tatsächlichen Drehrichtung des Reifens ausgebildet ist. So kann der aktive Indikator beispielsweise eine Beschleunigungsmesseinheit aufweisen, die zur Messung der auf den Indikator bzw. die Beschleunigungsmesseinheit wirkenden Beschleunigung ausgebildet ist. Basierend auf der gemessenen Beschleunigung kann der aktive Indikator ausgebildet sein, die tatsächliche Drehrichtung zu ermitteln und diese als die drehrichtungsbezogenen Rotationsdaten zur Verfügung zu stellen. Diese können sodann kontaktlos von dem aktiven Indikator an den Sensor des Systems übertragen werden, wenn der aktive Indikator kontaktlos von dem Sensor erfasst wird.

Eine vorteilhafte Ausgestaltung des Systems zeichnet sich dadurch aus, dass der Sensor ein RFID-Sensor ist und jeder Indikator des Reifens als ein RFID-Tag ausgebildet ist. Von einem derartigen RFID-Tag können reifendrehrichtungsbezogene Rotationsdaten gespeichert sein. Außerdem kann es mittels des RFID-Sensors möglich sein, den RFID-Tag auszulesen, wenn der RFID-Tag in den Sensorbereich des RFID-Sensors gebracht ist. Die Übertragung der reifendrehrichtungsbezogenen Rotationsdaten von dem RFID-Tag an den RFID-Sensor kann kontaktlos erfolgen. Darüber hinaus kann der RFID-Tag weitere Informationen umfassen, wie beispielsweise eine Identifikationsnummer. Dadurch lässt sich der RFID-Tag eindeutig identifizieren. Diese Informationen können ebenfalls an den RFID-Sensor übertragen werden.

Eine weitere vorteilhafte Ausgestaltung des Systems zeichnet sich dadurch aus, dass jeder Indikator als ein passiver Indikator ausgebildet ist. In diesem Fall kann es vorgesehen sein, dass jeder passive Indikator keine aktiven elektronischen Bauteile aufweist. So kann der passive Indikator beispielsweise von einem Teil oder Element gebildet sein, dass zumindest im Wesentlichen aus einem Stoff oder einer Stoffmischung bzw. einer Legierung besteht. Ein passiver Indikator kann sich darüber hinaus durch eine vorbestimmte Dichte, vorbestimmte Konturen und/oder vorbestimmte Stoffstrukturen auszeichnen. Ein passiver Indikator kann beispielsweise ein metallischer Stab sein.

Eine vorteilhafte Ausgestaltung des Systems zeichnet sich dadurch aus, dass der Sensor ein Hall-Sensor ist und jeder Indikator des Reifens als ein metallisches Element ausgebildet ist. Jeder Indikator kann somit als ein metallisches Element an dem Reifen befestigt und/oder in den Reifen integriert sein. Diese metallischen Elemente sind vorzugsweise in Umfangsrichtung des Reifens in einer vorbestimmten Verteilung und voneinander beabstandet angeordnet. Wird nun das mindestens eine metallische Element durch den Sensorbereich des Hall-Sensors bewegt, kann dies von dem Hall-Sensor erfasst werden. Denn die Bewegung des metallischen Elementes verursacht eine Veränderung des Magnetfelds, die von einem Hall-Sensor erfassbar ist. Sind für den Reifen mehrere metallische Elemente vorgesehen, so wird die Veränderung des Magnetfelds durch jedes der metallischen Elemente von dem Hall-Sensor erfasst. Die metallischen Elemente eines Reifens können sich voneinander unterscheiden. Dies erlaubt die Bestimmung der Drehrichtung aufgrund der jeweils entsprechenden, unterschiedlichen Veränderungen des Magnetfelds, was von dem Hall-Sensor erfassbar ist. Mit den metallischen Elementen ist also eine Veränderung des Magnetfelds im Sensorbereich des Hall-Sensors möglich, was von dem Hall-Sensor erfasst wird. Dadurch können die metallischen Elemente reifendrehrichtungsbezogene Rotationsdaten zumindest indirekt an den Sensor übertragen, was durch die entsprechende Veränderung der Magnetfelder erfolgt. Mit anderen Worten kann der Sensor reifendrehrichtungsbezogene Rotationsdaten, die zu der Veränderung des Magnetfelds korrespondieren, zumindest indirekt mit den metallischen Elementen als Indikatoren des Reifens kontaktlos erfassen.

Eine weitere vorteilhafte Ausgestaltung des Systems zeichnet sich dadurch aus, dass der Sensor ein Ultraschallsensor ist und jeder Indikator des Reifens als eine Nut, eine Erhebung oder ein vorbestimmter Konturabschnitt des Reifens ausgebildet ist. Mittels des Ultraschallsensors können akustische Testsignale ausgesendet werden, deren Reflektion an einem Gegenstand zu einem Reflektionssignal führt, das wiederum von dem Ultraschallsensor erfassbar ist. Vertiefungen, wie Nuten oder Erhebungen an dem Reifen verursachen deshalb unterschiedliche Reflektionssignale, die von dem Ultraschallsensor erfassbar sind. Entsprechendes gilt für Konturen eines Reifens. Derartige Konturen können zu einer Vielzahl von unterschiedlichen Reflektionssignalen führen. Durch die Verwendung von Nuten, Erhebungen und/oder Konturabschnitten eines Reifens ist es möglich, dass Reflektionssignale enstehen, die die reifendrehrichtungsbezogenen Rotationsdaten repräsentieren, wenn die Nuten, Erhebungen bzw. Konturabschnitte des Reifens in den Sensorbereich des Ultraschallsensors bewegt werden. Mit anderen Worten kann es vorgesehen sein, dass jeder Indikator als ein von einem Ultraschallsignal detektierbarer Indikator ist, wobei der mindestens eine Indikator zu einem Reflektionssignal beiträgt bzw. dieses bestimmt, sodass das Reflektionssignal die reifendrehrichtungsbezogenen Rotationsdaten repräsentiert, wenn der entsprechende Indikator in den Sensorbereich des Ultraschallsensors bewegt wird.

Eine vorteilhafte Ausgestaltung des Systems zeichnet sich dadurch aus, dass der Sensor ein optischer Sensor ist und jeder Indikator als ein optisches Merkmal, insbesondere ein optisch erkennbares Zeichen, auf einer Außenseite des Reifens ausgebildet ist. Das optische Merkmal kann ein optisches Zeichen sein, wie beispielsweise ein Aufdruck eines Zeichens auf der Außenseite des Reifens, wobei das Zeichen die Erfassung der Drehrichtung erlaubt. Das Zeichen kann beispielsweise als ein Pfeil ausgestaltet sein. Andere optische Zeichen sind jedoch auch möglich. Ein optisches Merkmal kann auch ein optisch kodiertes Zeichenfeld sein. Das optische Merkmal kann aufgedruckt, eingeprägt und/oder durch erhabene Zeichen ausgestaltet sein. Bewegt sich das optische Merkmal in einer Richtung durch den Sensorbereich des Sensors des Systems, kann dies reifendrehrichtungsbezogene Rotationsdaten repräsentieren, anhand der die Drehrichtung des Reifens ermittelbar ist. Bewegt sich das optische Merkmal in einer entgegengesetzten Richtung durch den Sensorbereich des Sensors, so stellt dies ebenfalls reifendrehrichtungsbezogene Rotationsdaten dar, die zur Ermittlung der Drehrichtung des Reifens dienen. In diesem Fall wird die entgegengesetzte Drehrichtung des Reifens ermittelt.

Eine vorteilhafte Ausgestaltung des Systems zeichnet sich dadurch aus, dass jeder Indikator des Reifens eindeutig ist und/oder identifizierbar ist. Sind beispielsweise mehrere Indikatoren für einen Reifen vorgesehen, so ist es von Vorteil, wenn jeder Indikator eindeutig ausgestaltet ist. Dies erlaubt die Erkennung des jeweiligen Indikators und beispielsweise die Reihenfolge der Indikatoren, mit der die Indikatoren durch den Sensorbereich des Sensors des Systems bewegt werden. Hierdurch kann auf die Drehrichtung des Reifens geschlossen werden. Darüber hinaus ist von Vorteil, wenn jeder Indikator des Reifens identifizierbar ist. Dies gilt insbesondere bei der Ausgestaltung der Indikatoren als aktive Indikatoren. Die Identifizierung kann über eindeutige Identifikationszeichen und/oder Identifikationscodes erfolgen. Durch die identifizierbaren Indikatoren wird gewährleistet, dass die erfassten, reifendrehrichtungsbezogenen Rotationsdaten besonders verlässlich sind.

Gemäß einem zweiten Aspekt der Erfindung wird die eingangs genannte Aufgabe gelöst durch ein Kraftfahrzeug, das eine Mehrzahl von Reifen und ein System aufweist, wie es zuvor erläutert wurde. Für das System wird auf die vorangegangen Erläuterungen, bevorzugten Merkmale, Effekte und/oder Vorteile zumindest in analoger Weise Bezug genommen, wie sie für das System gemäß dem ersten Aspekt, der zugehörigen vorteilhaften Ausgestaltungen und/oder der weiteren bevorzugten Ausgestaltungen erläutert worden ist. Der Sensor des Systems ist dabei in Bezug zu einem der Reifen des Kraftfahrzeugs derart angeordnet, sodass mittels des Sensors reifendrehrichtungsbezogene Rotationsdaten von oder mit dem mindestens einen Indikator dieses Reifens kontaktlos erfassbar sind. Für das Fahrzeug wird auf die vorteilhaften Effekte und/oder Vorteile Bezug genommen, wie sie im Zusammenhang mit dem System gemäß dem ersten Aspekt bzw. der zugehörigen vorteilhaften Ausgestaltungen erläutert worden sind. Mittels des Systems steht dem Fahrzeug deshalb die Information zur Verfügung, ob der Reifen eines Fahrzeugs derart montiert ist, dass die tatsächliche Drehrichtung des Reifens bei einer Vorwärtsbewegung des Fahrzeugs der Vorzugsdrehrichtung des Reifens entspricht.

Eine vorteilhafte Ausgestaltung des Kraftfahrzeugs zeichnet sich dadurch aus, dass das Kraftfahrzeug eine Steuereinheit umfasst, die konfiguriert ist, ein Warnsignal von der Verarbeitungseinheit des Systems zu empfangen, wobei die Steuereinheit konfiguriert ist, eine Warnmeldung basierend auf dem Warnsignal und mittels einer Ausgabeeinheit optisch und/oder akustisch in einem Fahrzeuginnenraum des Kraftfahrzeugs auszugeben. Die Verarbeitungseinheit des Systems ist vorzugsweise derart ausgebildet, das Warnsignal an die Steuereinheit des Kraftfahrzeugs zu übertragen. Das Warnsignal wird von der Verarbeitungseinheit vorzugsweise dann erzeugt, wenn die ermittelte Drehrichtung des Reifens von einer vorbestimmten Referenzdrehrichtung für den Reifen abweicht. In diesem Fall ist es bevorzugt vorgesehen, dass die Warnmeldung mittels der Ausgabeeinheit optisch und/oder akustisch im Fahrzeuginnenraum ausgegeben wird. Dies kann von der Steuereinheit entsprechend gesteuert sein. So kann die Warnmeldung beispielsweise optisch durch ein optisches Anzeigeelement als ein Teil der Ausgabeeinheit im Cockpit des Kraftfahrzeugs angezeigt werden. Darüber hinaus kann die Ausgabeeinheit einen akustischen Signalgeber umfassen, der zur akustischen Ausgabe der Warnmeldung im Fahrzeuginnenraum ausgestaltet ist. Der Fahrer des Kraftfahrzeugs erhält also darüber die Information, dass der Reifen bei einer Vorwärtsbewegung des Kraftfahrzeugs eine Drehrichtung ausführt, die von der vorbestimmten Referenzdrehrichtung des Reifens abweicht. Die Steuereinheit des Kraftfahrzeugs kann dazu ausgebildet und/oder konfiguriert sein, eine Bewegungsrichtung und/oder eine Bewegungsgeschwindigkeit des Fahrzeugs über ein Steuersignal an die Verarbeitungseinheit des Systems zu übertragen. Die Verarbeitungseinheit des Systems kann dazu eine entsprechende Eingangsschnittstelle zum Empfang dieses Steuersignals aufweisen. Die Verarbeitungseinheit des Systems kann außerdem dazu konfiguriert und/oder ausgebildet sein, die Erfassung der reifendrehrichtungsbezogenen Rotationsdaten nur dann vorzunehmen, wenn das Fahrzeug eine Vorwärtsbewegung, insbesondere mit einer vorbestimmten Geschwindigkeit, ausführt.

Weitere Merkmale, Vorteile und/oder Anwendungsmöglichkeit der vorliegenden Erfindung ergeben sich aus der nachfolgenden Beschreibung der Ausführungsbeispiele und/oder den Figuren. Dabei bilden alle beschriebenen und/oder bildlich dargestellten Merkmale für sich und/oder in einer beliebigen Kombination den Gegenstand der Erfindung auch unabhängig von ihrer Zusammensetzung in den einzelnen Ansprüchen und/oder deren Rückbezügen. In den Figuren stehen weiterhin gleiche Bezugszeichen für gleiche oder ähnliche Objekte.
- Figur 1: zeigt eine vorteilhafte Ausgestaltung eines Systems sowie eines Fahrzeugs mit einem derartigen System in einer schematischen Perspektivansicht.
- Figuren 2a - 3b: zeigen jeweils einen Ausschnitt des Fahrzeugs mit einem System.

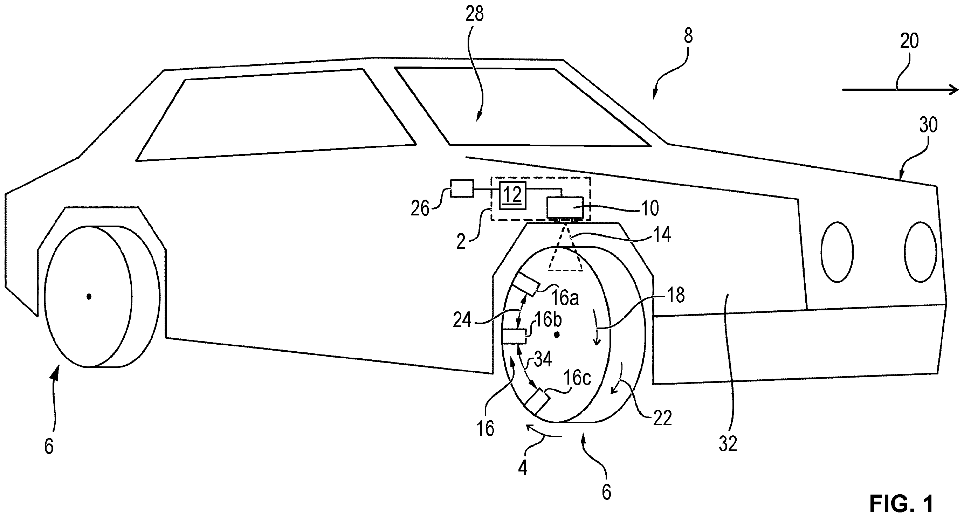

In der Figur 1 ist ein Kraftfahrzeug 8 schematisch dargestellt. Das Kraftfahrzeug 8 weist ein System 2 auf. Wenn im Weiteren das System 2 des Kraftfahrzeugs 8 erläutert wird, soll damit gleichzeitig auch die Erläuterung des Systems 2 unabhängig von dem Fahrzeug 8 gemeint sein. Mit anderen Worten gelten die folgenden Erläuterungen im Zusammenhang mit dem System 2 auch für den Fall, dass das System 2 separat und einzeln handhabbar ausgestaltet ist.

Das System 2 dient zur Ermittlung einer Drehrichtung 4 eines Reifens 6 eines Kraftfahrzeugs 8. Das in Figur 1 dargestellte Fahrzeug 8 weist mehrere Reifen 6 auf. Für die weitere Erläuterung soll auf den vorderen, dargestellten Reifen 6 eingegangen werden.

Ein Reifen 6 kann unterschiedlich an einem Fahrzeug 8 montiert sein. Einem Reifen 6 ist zumeist eine Vorzugsdrehrichtung 18 zugeordnet. Diese Vorzugsdrehrichtung 18 ist durch einen Pfeil auf einer Seitenwand des Reifens 6 angedeutet. Die Vorzugsdrehrichtung 18 wird auch als vorbestimmte Referenzdrehrichtung des Reifens 6 bezeichnet. Wenn das Fahrzeug 8 in einer Vorwärtsrichtung 20 bewegt wird, ist es bevorzugt vorgesehen, dass der Reifen 6 eine Drehbewegung ausführt, die zu der Vorzugsdrehrichtung 18 korrespondiert. Ist dies der Fall, besteht zwischen dem Reifen 6 und dem Untergrund, auf dem der Reifen 6 abrollt, eine besonders hohe und/oder die erwartete Bodenhaftung. Ist der Reifen 6 hingegen derart montiert, dass der Reifen 6 eine Drehbewegung ausführt, die entgegen der Vorzugsdrehrichtung 18 ist, wenn das Fahrzeug 8 in der Vorwärtsrichtung 20 bewegt wird, so besteht eine deutlich geringere Bodenhaftung. Dies ist zu vermeiden. Mittels des Systems 2 kann deshalb die Drehrichtung 4 des Reifens 6 des Kraftfahrzeugs 8 ermittelt werden. Mit der ermittelten Drehrichtung 4 ist dabei die tatsächliche Drehrichtung 4 des Reifens 6 gemeint, die ausgeführt wird, wenn der Reifen 6 bezogen auf einem Momentanpol des Reifens 6, insbesondere auf die zentrale Drehachse, eine translatorische Bewegung ausführt, vorzugsweise in Vorwärtsrichtung 20.

Das System 2 weist einen Sensor 10 und eine Verarbeitungseinheit 12 auf. Bei der Verarbeitungseinheit 12 handelt es sich vorzugsweise um eine Datenverarbeitungseinheit. Der Sensor 10 ist vorzugsweise ein kontaktloser Sensor 10. Der Sensor 10 ist derart ausgebildet, angeordnet zu werden, so dass der Reifen 6 des Kraftfahrzeugs 8 von einem Sensorbereich 14 des Sensors 10 erfassbar ist. Dabei ist es bevorzugt vorgesehen, dass der Sensor 10 derart angeordnet werden kann, dass zumindest ein Teil des Reifens 6 des Kraftfahrzeugs 8 von dem Sensorbereich 14 des Sensors 10 erfassbar ist. Außerdem ist der Sensor 10 ausgebildet, reifendrehrichtungsbezogene Rotationsdaten von einem Indikator 16 des Reifens 6 und/oder mit bzw. mittels mindestens einem Indikator 16 des Reifens 6 kontaktlos zu erfassen. Mit anderen Worten kann es vorgesehen sein, dass der Sensor 10 ausgebildet ist, reifendrehrichtungsbezogene Rotationsdaten direkt vom oder indirekt mit mindestens einem Indikator 16 des Reifens 6 kontaktlos zu erfassen. Die Verarbeitungseinheit 12 des Systems 2 ist konfiguriert, eine Drehrichtung 4 des Reifens 6 basierend auf den erfassten Rotationsdaten zu ermitteln. Der Sensor 10 ist mit der Verarbeitungseinheit 12 derart gekoppelt, sodass die von dem Sensor 10 erfassten, reifendrehrichtungsbezogenen Rotationsdaten an die Verarbeitungseinheit 12 übertragen werden. Dazu können der Sensor 10 und die Verarbeitungseinheit 12 über eine Datenübertragungsleitung miteinander gekoppelt sein. Es ist jedoch auch möglich, dass der Sensor 10 und die Verarbeitungseinheit 12 als eine integrale Einheit ausgebildet sind. Wenn im Weiteren auf die Rotationsdaten Bezug genommen wird, ist bzw. sind damit die reifendrehrichtungsbezogenen Rotationsdaten gemeint. Die Rotationsdaten zeichnen sich vorzugsweise dadurch aus, dass sie die Drehrichtung 4 des Reifens 6 direkt oder indirekt repräsentieren.

Der in Figur 1 dargestellte Vorderreifen 6 des Kraftfahrzeugs 8 weist beispielsweise zwei Indikatoren 16 auf. Hierbei handelt es sich um den ersten Indikator 16a und den zweiten Indikator 16b. Jeder Indikator 16a, 16b kann beispielsweise ein passives Element oder ein aktives Bauteil sein.

Für ein Ausführungsbeispiel kann es vorgesehen sein, dass der erste und zweite Indikator 16a, 16b jeweils ein eindeutig identifizierbares, metallisches Element sind. So kann der erste Indikator 16a beispielsweise ein kleineres metallisches Element sein, als der zweite Indikator 16b. Grundsätzlich kann dies auch umgekehrt ausgestaltet sein. Durch die Größe der metallischen Elemente lassen sich die beiden Indikatoren 16a, 16b voneinander unterscheiden. Darüber hinaus ist es bevorzugt vorgesehen, dass die beiden Indikatoren 16a, 16b in einer Umfangsrichtung 22 des Reifens 6 voneinander beabstandet sind. Somit können die beiden Indikatoren 16a, 16b einen vorbestimmten Abstand 24 voneinander aufweisen. Der Abstand 24 kann sich beispielsweise auf ein Winkelmaß beziehen. So kann der Abstand 24 beispielsweise 60 Grad betragen. Dies bezieht sich sodann auf den kleinsten Abstand 24 zwischen den beiden Indikatoren 16a, 16b. Wird das Fahrzeug 8 in Vorwärtsrichtung 20 bewegt, so dass der Reifen 6 eine Drehrichtung 4 ausführt, die zu der Vorzugsdrehrichtung 18 korrespondiert, wird der erste Indikator 16a vor dem zweiten Indikator 16b von dem Sensor 10 erfasst, da zunächst der erste Indikator 16a in den Sensorbereich 14 des Sensors 10 bewegt wird, und der zweite Indikator 16b erst zeitlich danach.

Der Sensor 10 kann beispielsweise ein Hall-Sensor sein. Werden die beiden metallischen Elemente, die die beiden Indikatoren 16a, 16b bilden, in einer Rotationsbewegung durch den Sensorbereich 14 des Hall-Sensors geführt, so führt dies zu einer charakteristischen Veränderung des Magnetfelds. Denn das metallische Element des ersten Indikators 16a ist kleiner als das metallische Element des zweiten Indikators 16b. Mittels des Sensors 10 wird also nicht nur die Veränderung des Magnetfelds, sondern auch die Reihenfolge der jeweiligen Veränderung des Magnetfelds erfasst. Diese Veränderungen des Magnetfelds sowie die Reihenfolge der Veränderungen des Magnetfelds können die reifendrehrichtungsbezogenen Rotationsdaten sein bzw. repräsentieren. Die Verarbeitungseinheit 12 erhält diese Rotationsdaten und ist dazu konfiguriert, die Drehrichtung 4 des Reifens 6 basierend auf den erfassten Rotationsdaten zu ermitteln. In diesem Fall ermittelt die Verarbeitungseinheit 12, dass die Drehrichtung 4 der Vorzugsdrehrichtung 18 entspricht, wenn das Fahrzeug 8 in Vorwärtsrichtung 20 bewegt wird. Der Reifen 6 bietet deshalb eine besonders gute Bodenhaftung.

Würden die beiden Indikatoren 16a, 16b jedoch in umgekehrter Reihenfolge durch den Sensorbereich 14 bei einer Bewegung in Vorwärtsrichtung 20 des Fahrzeugs 8 geführt werden, so würde die Verarbeitungseinheit 12 eine Drehrichtung 4 des Reifens 6 basierend auf den entsprechenden Rotationsdaten ermitteln, wobei die ermittelte Drehrichtung 4 von der Vorzugsdrehrichtung 18 abweicht. Vielmehr ist die ermittelte Drehrichtung 4 sodann entgegengesetzt zu der Vorzugsdrehrichtung 18, was dazu führt, dass der Reifen 6 eine verringerte Bodenhaftung bietet. Für das System 2 ist es deshalb bevorzugt vorgesehen, dass die Verarbeitungseinheit 12 dazu konfiguriert ist, ein Warnsignal zu erzeugen, wenn die ermittelte Drehrichtung 4 des Reifens 6 von der Vorzugsdrehrichtung 18 des Reifens 6 abweicht. Die Vorzugsdrehrichtung 18 kann von der Verarbeitungseinheit 12 gespeichert sein. Das erzeugte Warnsignal repräsentiert vorzugsweise eine Drehrichtungswarnung.

Außerdem ist es bevorzugt vorgesehen, dass das Kraftfahrzeug 8 eine Steuereinheit 26 aufweist, die konfiguriert ist, das Warnsignal von der Verarbeitungseinheit 12 des Systems 2 zu empfangen. Die Steuereinheit 26 ist vorzugsweise dazu konfiguriert, eine Warnmeldung basierend auf dem Warnsignal und mittels einer (nicht dargestellten) Ausgabeeinheit optisch und/oder akustisch in einem Fahrzeuginnenraum 28 des Kraftfahrzeugs 8 auszugeben. Die Verarbeitungseinheit 12 ist zum Senden des Warnsignals an die Steuereinheit 26 ausgebildet. Sind die Verarbeitungseinheit 12 und die Steuereinheit 26 beispielsweise über eine Signalübertragungsleitung verbunden, so kann das Warnsignal über diese Signalübertragungsleitung von der Verarbeitungseinheit 12 an die Steuereinheit 26 übertragen werden.

Zuvor wurde erläutert, dass die Indikatoren 16 von zwei Indikatoren 16a, 16b, nämlich dem ersten Indikator 16a und dem zweiten Indikator 16b, gebildet sind. Grundsätzlich können jedoch auch noch weitere Indikatoren vorgesehen sein. Rein beispielhaft ist dies ebenfalls bei dem Vorderreifen 6 in der Figur 1 gezeigt. Denn der Reifen 6 kann beispielsweise drei Indikatoren 16, nämlich den ersten Indikator 16a, den zweiten Indikator 16b und den dritten Indikator 16c aufweisen. Dabei ist es möglich, dass jeder der drei Indikatoren 16a, 16b, 16c gleich ausgebildet ist. So kann jeder dieser Indikatoren 16a, 16b, 16c als ein identisches, metallisches Element ausgebildet sein. Die Indikatoren 16a, 16b, 16c können in Umfangsrichtung 22 des Reifens 6 voneinander beabstandet angeordnet sein. Dabei ist es bevorzugt vorgesehen, dass der kleinste Abstand 24 zwischen dem ersten Indikator 16a und dem zweiten Indikator 16b kleiner ist als ein Abstand 34 zwischen dem zweiten Indikator 16b und dem dritten Indikator 16c. Wird das Fahrzeug nun in Vorwärtsrichtung 20 bewegt, führt dies zu einer Drehbewegung des Reifens 6, was zur Folge hat, dass zunächst der erste Indikator 16a, dann der zweite Indikator 16b und schließlich der dritte Indikator 16c durch den Sensorbereich 14 des Sensors 10 bewegt werden. Jeder der Indikatoren 16a, 16b, 16c führt zu einer zumindest im Wesentlichen gleichen Veränderung des vom Sensor 10 bereitgestellten Magnetfelds. Jedoch kann die Veränderung des Magnetfelds, hervorgerufen durch den jeweiligen Indikator 16a, 16b, 16c, auch zeitlich erfasst werden, so dass die entsprechenden Zeitpunkte ebenfalls Aufschluss über die Abstände 24, 34 zwischen den Indikatoren 16a, 16b, 16c gibt. Diese Zeitpunkte bzw. Abstände 24, 34 können sodann die reifendrehrichtungsbezogenen Rotationsdaten sein bzw. repräsentieren. Außerdem stellt diese Ausgestaltung ein Beispiel dafür dar, dass der Sensor 10 ausgebildet sein kann, die reifendrehrichtungsbezogenen Daten mit bzw. indirekt mittels der Indikatoren 16a, 16b, 16c des Reifens 6 kontaktlos zu erfassen. Die erfassten Zeitpunkte bzw. die Anordnung der Abstände 24, 34 in der entsprechenden Reihenfolge hintereinander gibt darüber Aufschluss, in welcher Richtung der Reifen 6 gedreht wird. Die Verarbeitungseinheit 12 ist konfiguriert, die tatsächliche Drehrichtung 4 des Reifens 6 basierend auf den erfassten Rotationsdaten zu ermitteln. Wurde also mittels des Sensors 10 eine Veränderung des Magnetfelds derart festgestellt, dass zwischen dem als erstes gemessenen Indikators 16a und dem als zweites gemessenen Indikators 16b ein Abstand 24 besteht, der kleiner ist als der Abstand 34 zwischen dem als zweites erfassten Indikators 16b und des dritten erfassten Indikators 16c, so ist die Verarbeitungseinheit 12 dazu konfiguriert, die Drehrichtung 4 des Reifens derart zu bestimmen, dass diese der Vorzugsdrehrichtung 18 entspricht. Wurde der Reifen 6 jedoch umgekehrt montiert, sodass zunächst der dritte Indikator 16c, daraufhin der zweite Indikator 16b und schließlich der erste Indikator 16a erfasst wird, so wird die Verarbeitungseinheit 12 eine umgekehrte Drehrichtung 4 des Reifens 6 ermitteln, die von der Vorzugsdrehrichtung 18 abweicht. Sodann kann die Verarbeitungseinheit 12 das zuvor erläuterte Warnsignal erzeugen und vorzugsweise an die Steuereinheit 26 übertragen.

Anstatt der zuvor erläuterten Abstände 24, 34 ist es jedoch auch möglich, dass die Erfassungszeiten der Indikatoren 16a, 16b, 16c zumindest einen Teil der reifendrehrichtungsbezogenen Rotationsdaten bilden und/oder repräsentieren. So kann es für das System 2 vorgesehen sein, dass der Sensor 10 konfiguriert ist, die reifendrehrichtungsbezogenen Rotationsdaten berührungslos von oder mittels jedem einer Vielzahl von Indikatoren 16a, 16b, 16c des Reifens 6 zu jeweils einer anderen, entsprechenden Erfassungszeit zu erfassen, wobei die Indikatoren versetzt zueinander in Umfangsrichtung 22 des Reifens 6 angeordnet sind. In diesem Fall kann die Verarbeitungseinheit 12 dazu konfiguriert sein, die Drehrichtung 4 des Reifens 6 basierend auf den Rotationsdaten der Indikatoren 16a, 16b, 16c und/oder die Erfassungszeiten zu bestimmen.

Darüber hinaus sei zu erwähnen, dass die drei Indikatoren 16a, 16b, 16c nicht notwendigerweise gleich ausgebildet sein müssen. Es kann auch vorgesehen sein, dass jeder Indikator 16a, 16b, 16c eindeutig und/oder identifizierbar ist.

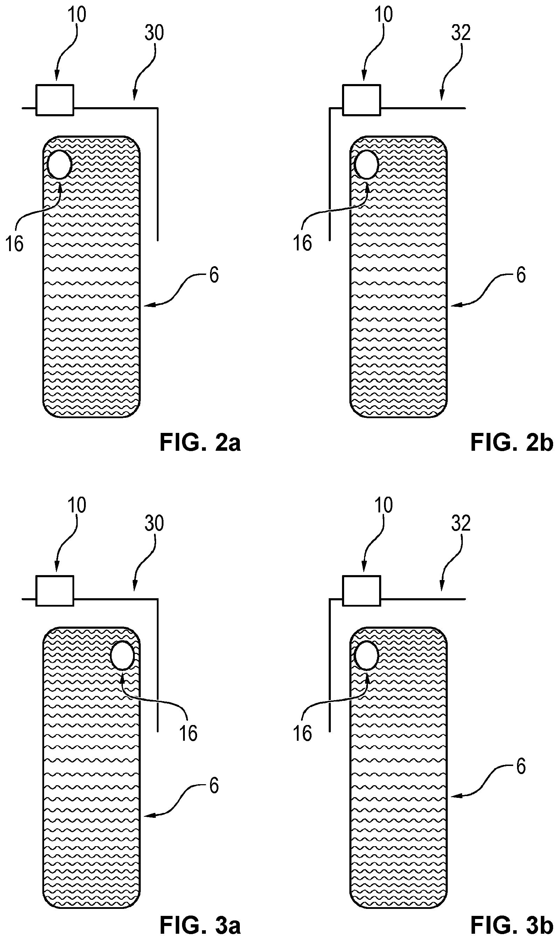

In den Figuren 2a und 2b sind die Vorderreifen 6 eines Fahrzeugs 8 schematisch dargestellt. Außerdem sind in den Figuren 2a und 2b jeweils Abschnitte der Kotflügel 30 bzw. 32 schematisch angedeutet.

Für einen Reifen 6 kann vorgesehen sein, dass der Indikator 16 randseitig an dem Reifen 6 angeordnet ist. Wenn ein derartiger Reifen 6 nun am linken Vorderrad befestigt ist, kann es vorgesehen sein, dass der Indikator 16 dieses Reifens 6 außenseitig zu dem Kotflügel 30 angeordnet ist. Wird der gleiche Reifen 6 als rechter Vorderreifen 6 verwendet, wie es schematisch in der Figur 2b gezeigt ist, kann es vorgesehen sein, dass der Indikator 16 innenseitig zu dem rechten Kotflügel 32 angeordnet ist.

Für jeden Reifen 6 des Fahrzeugs 8 kann ein Sensor 10 bzw. ein System 2 vorgesehen sein. Dabei kann es außerdem vorgesehen sein, dass der jeweilige Sensor 10 ausgebildet ist, reifendrehrichtungsbezogene Rotationsdaten indirekt mittels der Anordnung des Indikators 16 des Reifens 6 kontaktlos zu erfassen. In der Figur 2a ist der Indikator 16 des Reifens 6 beispielsweise außenseitig zu dem linken Kotflügel 30 angeordnet. Der Sensor 10 kann fluchtend zu der entsprechenden Außenseite des Reifens 6 angeordnet sein, sodass auch der Indikator 16 fluchtend zu dem Sensor 10 ist. Ist der Indikator 16 beispielsweise ein Metallelement und der Sensor 10 ein Hall-Sensor, so führt die Rotationsbewegung des Reifens 6 zu einer Veränderung des Magnetfelds, wenn der Indikator 16 durch den Sensorbereich 14 des Sensors 10 geführt wird. Ist der Reifen 6 jedoch verkehrtherum montiert, wie es beispielsweise auf der Figur 3a gezeigt ist, so wird der Indikator 16 das Magnetfeld des Sensors 10 bei einer gleichen Bewegung des Reifens 6 deutlich schwächer beeinflussen. Dies ist von dem Sensor 10 erfassbar. Außerdem repräsentiert die jeweilige Schwächung des Magnetfelds des Sensors 10 zumindest indirekt die reifendrehrichtungsbezogenen Rotationsdaten. Mit anderen Worten, können von dem Sensor 10 die reifendrehrichtungsbezogenen Rotationsdaten indirekt über die Anordnung der Indikatoren 16 bzw. die zugehörige Schwächung des Magnetfelds des Sensors 10 kontaktlos erfasst werden.

Wie zuvor erwähnt, ist in der Figur 2b der Reifen 6 an der vorderen rechten Seite des Fahrzeugs 8 gezeigt, wobei der Indikator 16 dieses Reifens 6 der Innenseite des rechten Kotflügels 32 zugewandt ist. Deshalb ist auch der Sensor 10 für diesen Reifen 6 innenseitig zu dem Kotflügel 32 angeordnet. In der Figur 3 ist der Reifen 6 erneut dargestellt. Allerdings wurde hier die Anordnung des Reifens 6 nicht vertauscht.

Das System 2 kann außerdem in einer bevorzugten Ausgestaltungsform dazu ausgebildet sein, mehrere Sensoren 10 aufzuweisen. So kann das System 2 beispielsweise den Sensor 10 aufweisen, wie dieser schematisch für den linken Vorderreifen 6 in Figur 2a gezeigt ist, sowie den Sensor 10 aufweisen, wie dieser in der Figur 2b für den rechten Vorderreifen 6 vorgesehen ist. Die Erkennung der Drehrichtung 4 für jeden der Reifen 6 kann sodann mittels der gleichen Verarbeitungseinheit 12 des Systems 2 erfolgen. Dies bietet den Vorteil, wenn beispielsweise mehrere Reifen 6 eine Drehrichtung 4 haben, die nicht der Vorzugsdrehrichtung 18 entsprechen. In diesem Fall kann es vorteilhaft sein, wenn die Reifen 6 des Fahrzeugs 8 getauscht werden. Die Verarbeitungseinheit 12 kann dazu ausgebildet sein, eine Vertauschreihenfolge der Reifen 6 und/oder eine Anordnung der Reifen 6 zu ermitteln, die es erlaubt, dass jeder der Reifen 6 eines Fahrzeugs 8 in der Vorzugsdrehrichtung 18 dreht, wenn das Fahrzeug 8 in der Vorwärtsrichtung 20 fährt.

Darüber hinaus kann es bevorzugt vorgesehen sein, dass die Steuereinheit 26 und/oder eine Navigationseinheit (nicht dargestellt) des Fahrzeugs 8 ausgebildet ist, basierend auf dem Warnsignal einen Ort zu ermitteln, wo die Reifen 6 gewechselt und/oder repariert werden können. So kann die Steuereinheit 26 bzw. die Navigationseinheit basierend auf dem Warnsignal dem Fahrer eine Route zu einer Werkstatt vorschlagen, wo die Reifen 6 gewechselt und/oder gedreht werden, um sicherzustellen, dass die Drehrichtung 4 der Reifen 6 bei einer Vorwärtsbewegung des Fahrzeugs 8 in Vorwärtsrichtung 20 gewährleistet ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- 2: System
- 4: Drehrichtung
- 6: Reifen
- 8: Kraftfahrzeug
- 10: Sensor
- 12: Verarbeitungseinheit
- 14: Sensorbereich
- 16: Indikator
- 16a: erster Indikator
- 16b: zweiter Indikator
- 16c: dritter Indikator
- 18: Vorzugsdrehrichtung
- 20: Vorwärtsrichtung
- 22: Umfangsrichtung
- 24: Abstand
- 26: Steuereinheit
- 28: Fahrzeuginnenraum
- 30: linker Kotflügel
- 32: rechter Kotflügel
- 34: Abstand

## Patentansprüche

1. System (2) zur Ermittlung der Drehrichtung (4) eines Reifens (6) eines Kraftfahrzeugs (8), wobei das System (2) aufweist:
einen Sensor (10), und
eine Verarbeitungseinheit (12);
wobei der Sensor (10) zur Anordnung derart ausgebildet ist, so dass mindestens einen Teil des Reifens (6) des Kraftfahrzeugs (8) von einem Sensorbereich (14) des Sensors (10) erfassbar ist;
wobei der Sensor (10) ausgebildet ist, reifendrehrichtungsbezogene Rotationsdaten von und/oder mit mindestens einem Indikator (16) des Reifens (6) kontaktlos zu erfassen; und
wobei die Verarbeitungseinheit (12) konfiguriert ist, eine Drehrichtung (4) des Reifens (6) basierend auf den erfassten Rotationsdaten zu ermitteln.

2. System (2) nach dem vorhergehenden Anspruch, **dadurch gekennzeichnet, dass** das System (2) einen Reifen (6) für ein Kraftfahrzeug (8) aufweist, wobei der Reifen (6) den mindestens einen Indikator (16) umfasst.

3. System (2) nach dem vorhergehenden Anspruch, **dadurch gekennzeichnet, dass** der Reifen (6) mindestens zwei Indikatoren (16) aufweist.

4. System (2) nach einem der vorhergehenden Ansprüche, wobei die Verarbeitungseinheit (12) konfiguriert ist, ein Warnsignal zu erzeugen, das eine Drehrichtungswarnung repräsentiert, wenn die ermittelte Drehrichtung (4) des Reifens (6) von einer vorbestimmten Referenzdrehrichtung (18) für den Reifen (6) abweicht.

5. System (2) nach dem vorhergehenden Anspruch, wobei die Verarbeitungseinheit (12) konfiguriert ist, das Warnsignal an eine Steuereinheit (26) des Kraftfahrzeugs (8) zu senden.

6. System (2) nach einem der vorhergehenden Ansprüche,
wobei der Sensor (10) konfiguriert ist, reifendrehrichtungsbezogene Rotationsdaten berührungslos von oder mittels jedem einer Vielzahl von Indikatoren (16) des Reifens (6) zu jeweils einer anderen, entsprechenden Erfassungszeit zu erfassen;
wobei die Indikatoren (16) versetzt zueinander in einer Umfangsrichtung (22) des Reifens (6) angeordnet sind; und
wobei die Verarbeitungseinheit (12) konfiguriert ist, die Drehrichtung (4) des Reifens (6) basierend auf den Rotationsdaten der Indikatoren (16) und den Erfassungszeiten zu bestimmen.

7. System (2) nach einem der vorhergehenden Ansprüche, wobei jeder Indikator (16) als ein aktiver Indikator (16) ausgebildet ist.

8. System (2) nach einem der vorhergehenden Ansprüche, wobei der Sensor (10) ein RFID-Sensor ist und jeder Indikator (16) des Reifens (6) als ein RFID-Tag ausgebildet ist.

9. System (2) nach einem der vorhergehenden Ansprüche 1 bis 6, wobei jeder Indikator (16) als ein passiver Indikator (16) ausgebildet ist.

10. System (2) nach einem der vorangehenden Ansprüche 1 bis 6 oder 9, wobei der Sensor (10) ein Hall-Sensor ist und jeder Indikator (16) des Reifens (6) als ein metallisches Element ausgebildet ist.

11. System (2) nach einem der vorangehenden Ansprüche 1 bis 6 oder 9, wobei der Sensor (10) ein Ultraschallsensor ist und jeder Indikator (16) des Reifens (6) als eine Nut, eine Erhebung oder ein vorbestimmter Konturabschnitt des Reifens (6) ausgebildet ist.

12. System (2) nach einem der vorangehenden Ansprüche 1 bis 6 oder 9, wobei der Sensor (10) ein optischer Sensor (10) ist und jeder Indikator (16) des Reifens (6) als ein optisches Merkmal, insbesondere ein optisch erkennbares Zeichen, auf einer Außenseite des Reifens (6) ausgebildet ist.

13. System (2) nach einem der vorstehenden Ansprüche, wobei jeder Indikator (16) des Reifens (6) eindeutig und/oder identifizierbar ist.

14. Kraftfahrzeug (8), aufweisend:
eine Mehrzahl von Reifen (6), und
ein System (2) nach einem der vorhergehenden Ansprüche,
wobei der Sensor (10) des Systems (2) in Bezug zu einem der Reifen (6) derart angeordnet ist, so dass mittels des Sensors (10) reifendrehrichtungsbezogene Rotationsdaten von oder mit dem mindestens einen Indikator (16) dieses Reifens (6) kontaktlos erfassbar sind.

15. Kraftfahrzeug (8) nach dem vorhergehenden Anspruch, wobei das Kraftfahrzeug (8) eine Steuereinheit (26) umfasst, die konfiguriert ist, ein Warnsignal von der Verarbeitungseinheit (12) des Systems (2) zu empfangen, und wobei die Steuereinheit (26) konfiguriert ist, eine Warnmeldung basierend auf dem Warnsignal und mittels einer Ausgabeeinheit optisch und/oder akustisch in einem Fahrzeuginnenraum (28) des Kraftfahrzeugs (8) auszugeben.
